# FASCICULE DE BREVET EUROPEEN

(11) **EP 3 684 145 B1**
(45) Date de publication et mention de la délivrance du brevet: **27.04.2022**
(21) Numéro de dépôt: 19220095.4
(22) Date de dépôt: 30.12.2019
(51) Int. Cl.: H05B 45/10, H05B 39/04, H05B 39/08

(54) **PROCÉDÉ ET UN DISPOSITIF DE CONTRÔLE DE FONCTIONNEMENT D'UN VARIATEUR DE LUMIÈRE POUR UNE CHARGE LUMINEUSE**
VERFAHREN UND EINE VORRICHTUNG ZUR FUNKTIONSKONTROLLE EINES DIMMERS FÜR EINE LICHTAUSBEUTE
METHOD AND DEVICE FOR CONTROLLING THE OPERATION OF A DIMMER SWITCH FOR A LIGHT

(30) Priorité: 09.01.2019 FR 1900174
(43) Date de publication de la demande: 22.07.2020
(73) Titulaire: Delta Dore, 35270 Bonnemain (FR)
(72) Inventeur: ARBONA, Carole, 35270 BONNEMAIN (FR); BERHAULT, Gilles, 35270 BONNEMAIN (FR); GENTIL, Marc, 35270 BONNEMAIN (FR); HENRY, Jean-Christophe, 35270 BONNEMAIN (FR)
(74) Mandataire: Cabinet Le Guen Maillet

(56) Documents cités:
- EP-A1- 2 600 698
- EP-B1- 2 600 698
- US-A1- 2006 255 745
- US-A1- 2008 054 728
- US-A1- 2012 253 535

## Description

### DOMAINE TECHNIQUE

La présente invention concerne un procédé et un dispositif de contrôle de fonctionnement d'un variateur de lumière pour une charge lumineuse.

### ETAT DE LA TECHNIQUE ANTERIEURE

La présente invention a trait à un procédé de contrôle de fonctionnement d'un variateur de lumière d'une charge lumineuse dont la puissance est contrôlée par le variateur de lumière. La charge lumineuse est constituée d'une ou plusieurs lampes à diodes électroluminescentes ou lampes LED présentant une impédance capacitive ou d'ampoules halogènes qui présentent une impédance résistive.

Les lampes à diodes électroluminescentes sont de plus en plus utilisées du fait de leur faible consommation en énergie électrique.

Les lampes à diodes électroluminescentes ont une impédance capacitive. La variation de l'alimentation en énergie électrique des lampes à diodes électroluminescente est réalisée en supprimant plus ou moins une partie de chaque alternance du signal de phase. Plus précisément, une première partie de chaque alternance est transmise à la charge alors qu'une seconde partie de l'alternance est bloquée.

Les angles de consigne appliqués à la charge lumineuse devraient varier de 0% à 100%. En réalité, n'étant pas relié au neutre, le variateur de lumière est alimenté par l'intermédiaire de la charge lumineuse et a besoin d'énergie électrique pour fonctionner et prélève cette énergie électrique pendant la seconde partie de l'alternance bloquée.

Il est ainsi nécessaire de régler le maximum de la première partie de chaque alternance pour garantir le bon fonctionnement du variateur de lumière, qui lorsqu'il n'est plus alimenté, provoque un scintillement de la lampe à diodes électroluminescentes.

Classiquement un seuil maximal est prédéfini. Ce seuil n'est malheureusement pas adapté à tout type de charge lumineuse.

La présente invention vise à adapter le seuil maximal de fonctionnement de la charge lumineuse en fonction de la charge lumineuse de manière à offrir la plus grande plage de variation de l'alimentation électrique de la charge lumineuse quel que soit le type de la charge lumineuse.

La demande de brevet US 2008/054728 divulgue un variateur de lumière.

### EXPOSE DE L'INVENTION

A cette fin, selon un premier aspect, l'invention propose un variateur de lumière pour une charge lumineuse, le variateur de lumière étant relié à la phase d'une alimentation électrique alternative et à la charge lumineuse, la charge lumineuse étant reliée au neutre de l'alimentation électrique alternative, le variateur de lumière fournissant une première partie de chaque alternance de la phase pour la charge lumineuse et bloquant une seconde partie de chaque alternance pour la charge lumineuse, le variateur de lumière comportant des moyens de modification de la durée de la première partie de chaque alternance, la durée de la première partie étant comprise entre une valeur minimale et une valeur maximale, caractérisé en ce que le dispositif comporte :
- un détecteur de passage à zéro du signal de la phase,
- des moyens de détermination d'une absence de détection du passage à zéro du signal de la phase pendant une durée prédéterminée,
- des moyens de modification de la valeur maximale de la première partie de chaque alternance en fonction de la détermination d'une absence de détection du passage à zéro du signal de la phase pendant une première durée prédéterminée.

L'invention concerne aussi un procédé de contrôle de fonctionnement d'un variateur de lumière pour une charge lumineuse, le variateur de lumière étant relié à la phase d'une alimentation électrique et à la charge lumineuse, la charge lumineuse étant reliée au neutre de l'alimentation électrique, le variateur de lumière fournissant une première partie de chaque alternance de la phase pour la charge lumineuse et bloquant une seconde partie de chaque alternance pour la charge lumineuse, le variateur de lumière comportant des moyens de modification de la durée de la première partie de chaque alternance, la durée de la première partie étant comprise entre une valeur minimale et une valeur maximale, caractérisé en ce que le procédé comporte les étapes de :
- détection de passage à zéro du signal de la phase,
- détermination d'une absence de détection du passage à zéro du signal de la phase pendant une durée prédéterminée,
- modification de la valeur maximale de la première partie de chaque alternance en fonction de la détermination d'une absence de détection du passage à zéro du signal de la phase pendant une première durée prédéterminée.

Ainsi, il est possible d'adapter le seuil maximal de fonctionnement en fonction de la charge lumineuse de manière à offrir la plus grande plage de variation de l'alimentation électrique de la charge lumineuse.

Selon un mode particulier, le détecteur de passage à zéro du signal de la phase détecte uniquement le passage à zéro du signal de la phase lorsque le signal de la phase diminue.

Ainsi, le passage à zéro du signal lorsque le signal de la phase augmente n'est pas traité car il n'est pas toujours l'image du zéro de la phase, la détection est ainsi plus fiable.

Selon un mode particulier, les moyens de modification de la valeur maximale de la première partie de chaque alternance décrémentent une valeur maximale prédéterminée tant qu'une absence de détection du passage à zéro du signal de la phase est détectée pendant la première durée prédéterminée.

Ainsi, le temps nécessaire à la détermination de la valeur maximale de la première partie de chaque alternance est réduit.

Selon un mode particulier, les moyens de modification de la valeur maximale de la première partie de chaque alternance interrompent la décrémentation de la valeur maximale prédéterminée si la détection du passage à zéro du signal de la phase est détectée pour chaque alternance positive pendant une seconde durée prédéterminée.

Ainsi, la seconde durée prédéterminée permet de s'assurer que la seconde partie de chaque alternance est suffisamment importante pour maintenir l'alimentation du variateur de lumière.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente un système d'éclairage dans lequel la présente invention est implémentée ;
[Fig. 2] représente un exemple d'architecture d'un variateur de lumière dans lequel la présente invention est implémentée;
[Fig. 3] représente un exemple de schéma électrique du module d'interface du variateur de lumière selon la présente invention ;
[Fig. 4a] représente un exemple de chronogrammes des signaux électriques lorsque le variateur de lumière est correctement alimenté ;
Fig. 4b] représente un exemple de chronogrammes des signaux électriques lorsque le variateur de lumière n'est pas correctement alimenté ;
[Fig. 5] représente un exemple d'algorithme exécuté par le variateur de lumière selon la présente invention.

### EXPOSE DETAILLE DE MODES DE REALISATION

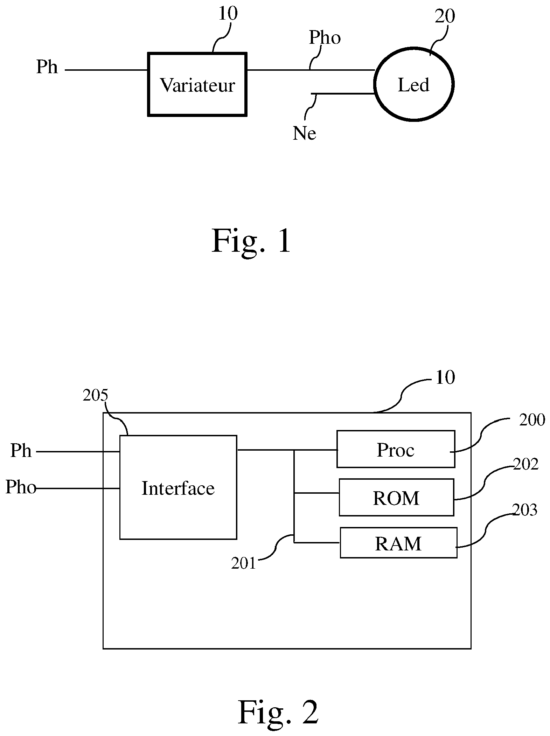

La Fig. 1 représente un système d'éclairage dans lequel la présente invention est implémentée.

Le système d'éclairage comporte une alimentation électrique phase Ph neutre Ne. L'alimentation électrique est une source alternative de tension par exemple de 230 Volts 50 Hz. La phase est reliée à un variateur de lumière 10, par exemple une lampe d'éclairage 20 dont l'intensité lumineuse est réglable par l'intermédiaire du variateur de lumière 10.

La lampe d'éclairage est par exemple une lampe à diodes électroluminescentes et est alimentée par le neutre Ne et un signal Pho dans lequel une partie de chaque alternance du signal de phase est transmise à la charge alors qu'une seconde partie de l'alternance est bloquée. Selon la présente invention, le variateur de lumière comporte :
- un détecteur de passage à zéro du signal de la phase,
- des moyens de détermination d'une absence de détection du passage à zéro du signal de la phase pendant une durée prédéterminée,
- des moyens de modification de la valeur maximale de la première partie de chaque alternance en fonction de la détermination d'une absence de détection du passage à zéro du signal de la phase pendant une première durée prédéterminée.

La Fig. 2 représente un exemple d'architecture d'un variateur de lumière dans lequel la présente invention est implémentée.

Le variateur de lumière 10 comprend :
- un processeur, micro-processeur, ou microcontrôleur 200 ;
- une mémoire volatile 203 ;
- une mémoire non volatile 202 ;
- un module d'interface 205,
- un bus de communication 201 reliant le processeur 200 à la mémoire ROM 203, à la mémoire RAM 203 et au module d'interface 205.

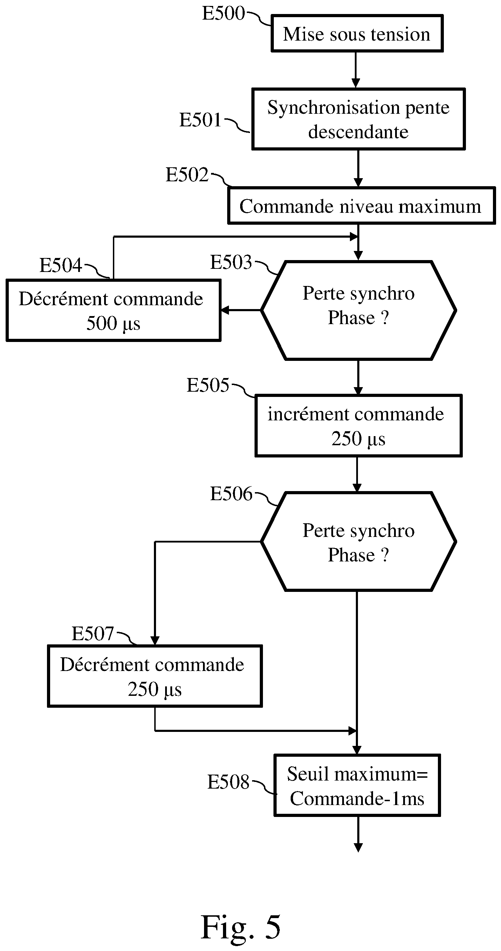

Le processeur 200 est capable d'exécuter des instructions chargées dans la mémoire volatile 203 à partir de la mémoire non volatile 202. Lorsque le variateur de lumière 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP *(Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC *(Application-Specific Integrated Circuit* en anglais ou *Circuit Intégré Spécifique à une Application* en français).

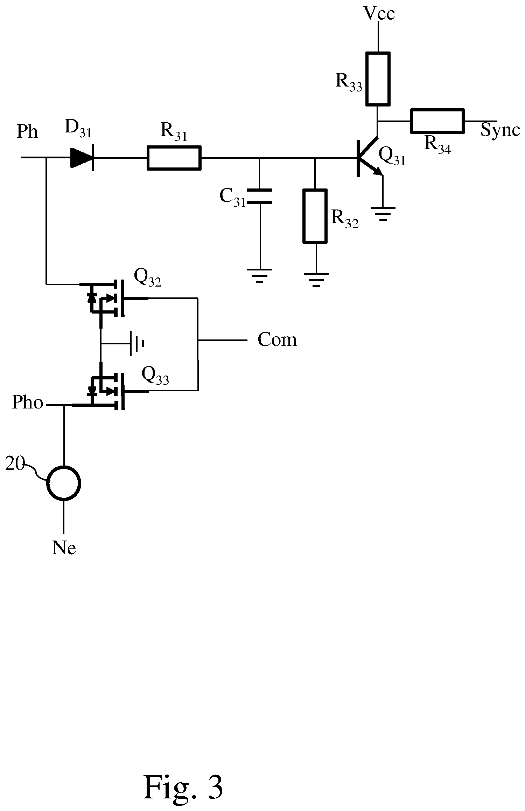

La Fig. 3 représente un exemple de schéma électrique du module d'interface du variateur de lumière selon la présente invention.

Le module d'interface 205 comporte une diode D₃₁ dont l'anode est reliée à la phase et la cathode est reliée à une première terminaison d'une résistance R₃₁. Une seconde terminaison de la résistance R₃₁ est reliée à une première terminaison d'un condensateur C₃₁, à une première terminaison d'une résistance R₃₂ et à la base d'un transistor Q₃₁.

Une seconde terminaison du condensateur C₃₁, une seconde terminaison de la résistance R₃₂ et l'émetteur du transistor Q₃₁ sont reliés à la masse Ma du variateur de lumière 10.

La diode D₃₁, le condensateur C₃₁ les résistances R₃₁ et R₃₂ forment un redresseur mono alternance et un pont diviseur de tension.

Le collecteur du transistor Q₃₁ est relié à une première terminaison d'une résistance R₃₄ et à une première terminaison d'une résistance R₃₃.

Une seconde terminaison de la résistance R₃₃ est reliée à l'alimentation continue du variateur de lumière 10.

Un signal Sync est pris à une seconde terminaison de la résistance R₃₄ et est le signal indiquant si la différence de potentiel entre la phase Ph et la masse Ma du variateur de lumière 10 est nulle. Le maintien du signal Sync au niveau haut pendant une durée supérieure à une valeur prédéterminée permet au processeur 200 de déterminer que la charge lumineuse scintille et que la durée de la première partie de chaque alternance transmise à la charge doit être réduite. Le signal Sync est représentatif du passage au niveau 0 du signal redressé mono alternance.

Les transistors Q₃₂ et Q₃₃ sont commandés par le processeur 200 à l'aide d'un signal Com. Les transistors Q₃₂ et Q₃₃ permettent de faire varier la durée de la première partie de chaque alternance qui est transmise à la charge lumineuse 20.

Le signal sur le drain du transistor Q₃₃ est le signal Pho alimentant la charge lumineuse 20.

Le drain du transistor Q₃₂ est relié à la phase Ph.

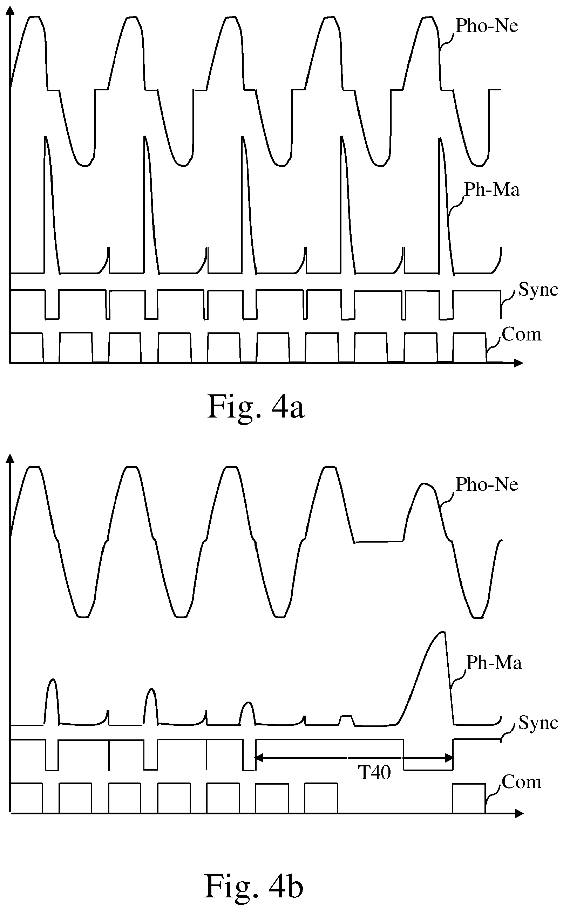

La Fig. 4a représente un exemple de chronogrammes des signaux électriques lorsque le variateur de lumière est correctement alimenté.

Le signal Pho-Ne représente la différence de potentiel entre le signal Pho et le neutre Ne. Le signal Ph-Ma représente la différence de potentiel entre la phase et la masse du variateur de lumière 10.

Le signal Com est le signal utilisé pour commander les transistors Q₃₂ et Q₃₃.

Le maintien du signal Sync au niveau haut pendant une durée inférieure à une première valeur prédéterminée, par exemple de 20 ms, permet au processeur 200 de déterminer que la durée de la première partie de chaque alternance est correcte et qu'aucun scintillement de la charge lumineuse n'apparaît.

La Fig. 4b représente un exemple de chronogrammes des signaux électriques lorsque le variateur de lumière n'est pas correctement alimenté.

Le signal Pho-Ne représente la différence de potentiel entre le signal Pho et le neutre. Le signal Ph-Ma représente la différence de potentiel entre la phase Ph et la masse du variateur de lumière 10.

Le signal Com est un signal utilisé pour commander les transistors Q₃₂ et Q₃₃.

Le maintien du signal Sync au niveau haut pendant une durée supérieure à la première valeur prédéterminée, par exemple de 20 ms, permet au processeur 200 de déterminer que la durée de la première partie de chaque alternance est trop importante et que des scintillements apparaissent.

Dans l'exemple de la Fig. 4b, le signal Sync est au niveau haut pendant une durée T40 supérieure à la première valeur prédéterminée, par exemple de 20 ms et qui correspond à la période du signal entre la phase et la masse.

Selon l'exemple de la Fig. 4b, la différence de potentiel entre la phase Ph et la masse Ma varie en fonction de la charge de l'impédance capacitive de la charge lumineuse jusqu'à arriver à un niveau de tension ne permettant pas une conduction du transistor Q₃₁, provoquant ainsi une perte dans la détection du passage à zéro du signal entre la phase Ph et la masse Ma.

La Fig. 5 représente un exemple d'algorithme exécuté par le variateur de lumière selon la présente invention.

Le présent algorithme est décrit dans un exemple dans lequel il est exécuté par le processeur 200.

A l'étape E500, le variateur de lumière 10 est mis sous tension. La mise sous tension est par exemple provoquée lors de l'installation du variateur de lumière 10 ou lors du remplacement de la charge lumineuse 20.

A l'étape E501, le processeur 200, à partir du signal Sync, procède à la détection d'une pente descendante du signal Ph-Ma soit le passage d'une valeur positive de la phase Ph vers une valeur négative de la phase Ph.

Pour cela, le processeur 200 commande la génération d'un signal Com telle que la première partie de chaque alternance soit égale à 0. A la détection d'une pente montante du signal Sync, le processeur 200 déclenche une temporisation Tinhib pendant laquelle le processeur 200 ne prend pas en compte une nouvelle détection de passage à zéro du signal Sync. La temporisation Tinhib sera déclenchée par la suite à chaque détection d'une pente montante du signal Sync.

La temporisation Tinib est inférieure à la période de la phase, est par exemple égale à 16ms.

La temporisation Tinib interdit ainsi toute détection du passage à 0 de la phase sur une pente montante.

A l'étape E502, le processeur 200 génère un signal de commande Com de manière à ce que la durée de la première partie de chaque alternance soit égale à une durée maximale prédéterminée Tmax qui est par exemple égale à 8,5 ms. La durée maximale Tmax est choisie pour que l'énergie électrique reçue par le variateur de lumière 10 pendant la seconde partie de chaque alternance permette à celui-ci d'être correctement alimenté en énergie électrique.

A l'étape E503, le processeur 200 vérifie si une absence de transition du signal Sync est détectée. Pour cela, le processeur 200 vérifie si le signal Sync reste au niveau haut pendant une durée supérieure à la première durée prédéterminée, par exemple de 20 ms. Dès qu'une absence de transition du signal Sync est détectée, le processeur 200 passe à l'étape E504. Si aucune absence de transition n'est détectée pendant une seconde durée prédéterminée égale à 5s, le processeur 200 passe à l'étape E505.

A l'étape E504, le processeur 200 génère un signal de commande Com de manière à ce que la durée de la première partie de chaque alternance soit réduite d'une durée égale à 500 µs. En d'autres termes, le processeur 200 met la valeur de Tmax égale à Tmax - 500 µs.

Cette étape effectuée, le processeur 200 retourne à l'étape E503.

A l'étape E505, le processeur 200 génère un signal de commande Com de manière à ce que la durée de la première partie de chaque alternance soit augmentée d'une durée égale à 250 µs. En d'autres termes, le processeur 200 met la valeur de Tmax égale à Tmax + 250 µs.

A l'étape E506, le processeur 200 vérifie si une absence de transition du signal Sync est détectée. Pour cela, le processeur 200 vérifie si le signal Sync reste au niveau haut pendant une durée supérieure à la première valeur prédéterminée. Dès qu'une absence de transition du signal Sync est détectée, le processeur 200 passe à l'étape E507. Si aucune absence de transition n'est détectée pendant la seconde durée prédéterminée égale à 5s, le processeur 200 passe à l'étape E508.

A l'étape E507, le processeur 200 génère un signal de commande Com de manière à ce que la durée de la première partie de chaque alternance soit réduite d'une durée égale à 250 µs. En d'autres termes, le processeur 200 met la valeur de Tmax égale à Tmax - 250 µs.

Cette étape effectuée, le processeur 200 passe à l'étape E508.

A l'étape E508, le processeur 200 mémorise la valeur de Tmax telle que Tmax égale Tmax - 1ms.

La valeur de 1ms est une marge de sécurité afin de s'assurer que la seconde partie de chaque alternance soit toujours suffisante pour une plage de tension de l'alimentation alternative phase neutre réseau allant de 200Veff à 253Veff.

Il est à remarquer ici que l'algorithme de la Fig. 5 est décrit dans un exemple dans lequel la valeur de Tmax est décrémentée jusqu'à la non détection d'une absence de transition du signal Sync. Le présent algorithme peut aussi être implémenté en incrémentant la valeur de Tmax, choisie par exemple égale à 5 ms, jusqu'à la détection d'une absence de transition du signal Sync.

## Revendications

1. Variateur (10) de lumière pour une charge lumineuse, le variateur de lumière étant adapté à être relié à la phase (Ph) d'une alimentation électrique alternative et à la charge lumineuse, la charge lumineuse étant reliée au neutre (Ne) de l'alimentation électrique alternative, le variateur de lumière fournissant (Pho) une première partie de chaque alternance de la phase pour la charge lumineuse et bloquant une seconde partie de chaque alternance pour la charge lumineuse, le variateur de lumière comportant des moyens (200, 205) de modification de la durée de la première partie de chaque alternance, la durée de la première partie étant comprise entre une valeur minimale et une valeur maximale, le variateur comportant :
- un détecteur (205) de passage à zéro du signal de la phase,
- des moyens (200) de modification de la valeur maximale de la première partie de chaque alternance,
- **caractérisé en ce que** le détecteur de passage à zéro du signal de la phase est configuré pour détecter uniquement le passage à zéro du signal de la phase lorsque le signal de la phase diminue,
**en ce que** le variateur comprend des moyens (200, 205) de détermination d'une absence de détection du passage à zéro du signal de la phase pendant une durée prédéterminée,
et **en ce que** la modification de la valeur maximale de la première partie de chaque alternance est en fonction de la détermination d'une absence de détection du passage à zéro du signal de la phase pendant une première durée prédéterminée.

2. Variateur selon la revendication 1, **caractérisé en ce que** les moyens de modification de la valeur maximale de la première partie de chaque alternance sont configurés pour décrémenter une valeur maximale prédéterminée tant qu'une absence de détection du passage à zéro du signal de la phase est détectée pendant la première durée prédéterminée.

3. Variateur selon la revendication 3, **caractérisé en ce que** les moyens de modification de la valeur maximale de la première partie de chaque alternance sont configurés pour interrompre la décrémentation de la valeur maximale prédéterminée si la détection du passage à zéro du signal de la phase est détectée pour chaque alternance positive pendant une seconde durée prédéterminée.

4. Procédé de contrôle de fonctionnement d'un variateur de lumière pour une charge lumineuse, le variateur de lumière étant relié à la phase d'une alimentation électrique et à la charge lumineuse, la charge lumineuse étant reliée au neutre de l'alimentation électrique, le variateur de lumière fournissant une première partie de chaque alternance de la phase pour la charge lumineuse et bloquant une seconde partie de chaque alternance pour la charge lumineuse, le variateur de lumière comportant des moyens de modification de la durée de la première partie de chaque alternance, la durée de la première partie étant comprise entre une valeur minimale et une valeur maximale, **caractérisé en ce que** le procédé comporte les étapes de :
- détection de passage à zéro du signal de la phase, le détecteur de passage à zéro du signal de la phase détecte uniquement le passage à zéro du signal de la phase lorsque le signal de la phase diminue,
- détermination d'une absence de détection du passage à zéro du signal de la phase pendant une durée prédéterminée,
- modification de la valeur maximale de la première partie de chaque alternance en fonction de la détermination d'une absence de détection du passage à zéro du signal de la phase pendant une première durée prédéterminée.

## Patentansprüche

1. Dimmer (10) für eine Lichtausbeute, wobei der Dimmer dazu geeignet ist, mit der Phase (Ph) einer Wechselstromversorgung und mit dem Lastanschluss verbunden zu sein, wobei der Lastanschluss mit dem Neutralleiter (Ne) der Wechselstromversorgung verbunden ist, wobei der Dimmer einen ersten Teil jeder Halbwelle der Phase für die Lichtausbeute bereitstellt (Pho) und einen zweiten Teil jeder Halbwelle der Phase für die Lichtausbeute blockiert, wobei der Dimmer Mittel (200, 205) zur Änderung der Dauer des ersten Teils jeder Halbwelle umfasst, wobei die Dauer des ersten Teils zwischen einem Mindestwert und einem Höchstwert liegt, wobei der Dimmer umfasst:
- einen Detektor (205) für den Nulldurchgang des Phasensignals,
- Mittel (200) zur Änderung des Höchstwertes des ersten Teils jeder Halbwelle,
**dadurch gekennzeichnet, dass** der Detektor für den Nulldurchgang des Phasensignals dazu konfiguriert ist, nur dann den Nulldurchgang des Phasensignals zu erkennen, wenn das Phasensignal abnimmt, dadurch, dass der Dimmer Mittel (200, 205) zur Feststellung einer Abwesenheit der Erkennung des Nulldurchgangs des Phasensignals während einer vorbestimmten Dauer umfasst,
und dadurch, dass die Änderung des Höchstwertes des ersten Teils jeder Halbwelle in Abhängigkeit von der Feststellung einer Abwesenheit des Nulldurchgangs des Phasensignals während einer vorbestimmten ersten Dauer erfolgt.

2. Dimmer nach Anspruch 1, **dadurch gekennzeichnet, dass** die Mittel zur Änderung des Höchstwertes des ersten Teils jeder Halbwelle dazu konfiguriert sind, einen vorbestimmten Höchstwert zu vermindern, solange eine Anwesenheit der Erkennung des Nulldurchgangs des Phasensignals während der vorbestimmten ersten Dauer erkannt wird.

3. Dimmer nach Anspruch 3, **dadurch gekennzeichnet, dass** die Mittel zur Änderung des Höchstwertes des ersten Teils jeder Halbwelle dazu konfiguriert sind, die Verminderung des vorbestimmten Höchstwertes zu unterbrechen, wenn die Erkennung des Nulldurchgangs des Phasensignals für jede positive Halbwelle während einer vorbestimmten zweiten Dauer erkannt wird.

4. Verfahren zur Steuerung des Betriebs eines Dimmers für eine Lichtausbeute, wobei der Dimmer mit der Phase einer Stromversorgung und mit dem Lastanschluss verbunden ist, wobei der Lastanschluss mit dem Neutralleiter der Stromversorgung verbunden ist, wobei der Dimmer einen ersten Teil jeder Halbwelle für die Lichtausbeute bereitstellt und einen zweiten Teil jeder Halbwelle für die Lichtausbeute blockiert, wobei der Dimmer Mittel zur Änderung der Dauer des ersten Teils jeder Halbwelle umfasst, wobei die Dauer des ersten Teils zwischen einem Mindestwert und einem Höchstwert liegt, **dadurch gekennzeichnet, dass** das Verfahren die Schritte umfasst:
- Erkennen des Nulldurchgangs des Phasensignals, wobei der Detektor für den Nulldurchgang des Phasensignals den Nulldurchgang des Phasensignals nur erkennt, wenn das Phasensignal abnimmt,
- Feststellen einer Abwesenheit der Erkennung des Nulldurchgangs des Phasensignals während einer vorbestimmten Dauer,
- Ändern des Höchstwertes des ersten Teils jeder Halbwelle in Abhängigkeit von der Feststellung einer Abwesenheit des Nulldurchgangs des Phasensignals während einer vorbestimmten ersten Dauer.

## Claims

1. Dimmer switch (10) for a light load, the dimmer switch being adapted to be linked to the phase (Ph) of an alternating electrical power supply and to the light load, the light load being linked to the neutral (Ne) of the alternating electrical power supply, the dimmer switch supplying (Pho) a first part of each alternation of the phase for the light load and blocking a second part of each alternation for the light load, the dimmer switch comprising means (200, 205) for modifying the duration of the first part of each alternation, the duration of the first part lying between a minimum value and a maximum value, the dimmer switch comprising:
- a detector (205) of the zero-crossing of the phase signal,
- means (200) for modifying the maximum value of the first part of each alternation,
- **characterized in that** the detector of the zero-crossing of the phase signal is configured to detect only the zero-crossing of the phase signal when the phase signal decreases,
**in that** the dimmer switch comprises means (200, 205) for determining an absence of detection of the zero-crossing of the phase signal during a predetermined time period, and **in that** the modification of the maximum value of the first part of each alternation is a function of the determination of an absence of detection of the zero-crossing of the phase signal during a first predetermined time period.

2. Dimmer switch according to Claim 1, **characterized in that** the means for modifying the maximum value of the first part of each alternation are configured to decrement a predetermined maximum value as long as an absence of detection of the zero-crossing of the phase signal is detected during the first predetermined time period.

3. Dimmer switch according to Claim 3, **characterized in that** the means for modifying the maximum value of the first part of each alternation are configured to interrupt the decrementing of the predetermined maximum value if the detection of the zero-crossing of the phase signal is detected for each positive alternation during a second predetermined time period.

4. Method for controlling operation of a dimmer switch for a light load, the dimmer switch being linked to the phase of an electrical power supply and to the light load, the light load being linked to the neutral of the electrical power supply, the dimmer switch supplying a first part of each alternation of the phase for the light load and blocking a second part of each alternation for the light load, the dimmer switch comprising means for modifying the duration of the first part of each alternation, the duration of the first part lying between a minimum value and a maximum value, **characterized in that** the method comprises the steps of:
- detecting the zero-crossing of the phase signal, the detector of zero-crossing of the phase signal detects only the zero-crossing of the phase signal when the phase signal decreases,
- determining an absence of detection of the zero-crossing of the phase signal during a predetermined time period,
- modifying the maximum value of the first part of each alternation as a function of the determination of an absence of detection of the zero-crossing of the phase signal during a first predetermined time period.
